# EUROPÄISCHE PATENTSCHRIFT

(11) **EP 1 775 507 B1**
(45) Veröffentlichungstag und Bekanntmachung des Hinweises auf die Patenterteilung: **05.03.2008**
(21) Anmeldenummer: 05022203.3
(22) Anmeldetag: 12.10.2005
(51) Int. Cl.: F16L 13/14, F16L 33/207

(54) **Fitting für Rohrleitungen**
Fitting for pipes
Raccord pour des tuyaux

(43) Veröffentlichungstag der Anmeldung: 18.04.2007
(73) Patentinhaber: Roth Werke GmbH, 35232 Dautphetal (DE)
(72) Erfinder:
(74) Vertreter: Rohmann, Michael

(56) Entgegenhaltungen:
- EP-A- 1 265 018
- EP-A- 1 265 019
- EP-A- 1 331 427
- EP-A- 1 361 385
- WO-A-03/012328
- DE-C1- 10 217 824

## Beschreibung

Die Erfindung betrifft einen Fitting für Rohrleitungen mit zumindest einem Anschlussstutzen, an dem das Ende einer Rohrleitung anschließbar ist. Ein derartiger Fitting ist beispielsweise aus der EP 1 265 019 A bekannt. Die Erfindung betrifft insbesondere einen Fitting bzw. Pressfitting mit mehr als einem Anschlussstutzen. Dabei kann es sich um einen linearen Fitting mit zwei an seinen Enden angeordneten gegenüberliegenden Anschlussstutzen handeln oder aber beispielsweise um einen winkelförmigen Fitting mit zwei an den Winkelenden angeordneten Anschlussstutzen. Der erfindungsgemäße Fitting kann aber auch als T-förmiger Fitting mit drei Anschlussstutzen ausgebildet sein. Bei den vorstehend genannten Fittings wird das Ende einer anzuschließenden Rohrleitung entweder auf den Anschlussstutzen aufgeschoben oder in den Anschlussstutzen eingeschoben. Wenn zur Herstellung der Verbindung das Ende der Rohrleitung auf den Anschlussstutzen aufgeschoben werden muss, läuft über den Außenumfang des Anschlussstutzens zumindest ein Dichtelement um, das beispielsweise als O-Ring ausgebildet ist. Außerdem ist normalerweise zumindest ein über den Außenumfang des Anschlussstutzens umlaufender erhabener Bereich vorgesehen, auf den das Rohrleitungsende gleichsam formschlüssig aufgeschoben wird und der zum Halten des Rohrleitungsendes an dem Anschlussstutzen dient. Bei vielen Fittings kommt die Innenoberfläche des aufgeschobenen Rohrleitungsendes auch in Kontakt mit der Oberseite des Dichtelementes.

Die Verbindung zwischen einem Rohrleitungsende und einem Anschlussstutzen wird wie folgt hergestellt. Wenn das Ende der Rohrleitung auf den Anschlussstutzen aufgeschoben werden soll, wird vorher eine Presshülse über dem Anschlussstutzen positioniert, die den Anschlussstutzen mit radialem Abstand umgibt. Das Ende der Rohrleitung wird dann zwischen Presshülse und Anschlussstutzen auf den Anschlussstutzen aufgeschoben. Zur Fixierung dieser Verbindung wird anschließend die Presshülse mit einem Presswerkzeug verpresst, so dass sich das Rohrleitungsende plastisch verformt. Das Rohrleitungsende wird dann auf ein Dichtelement bzw. auf einen Dichtring gleichsam aufgepresst, so dass eine dichte Verbindung resultiert. Bei Installationsarbeiten auf Baustellen muss in der Regel eine Vielzahl solcher Verbindungen hergestellt werden. Um festzustellen, ob alle Verbindungen ordnungsgemäß hergestellt bzw. verpresst wurden, wird normalerweise zur Probe ein Medium unter Druck bei der Abnahme der Installation durch das Rohrsystem geleitet. Man geht dabei davon aus, dass sich nicht ordnungsgemäß hergestellte Verbindungen durch Leckagen bemerkbar machen. Es kann aber vorkommen, dass beim Aufschieben des Rohrleitungsendes auf den Anschlussstutzen der über den Umfang des Anschlussstutzens umlaufende erhabene Bereich bereits in mehr oder weniger dichtenden Kontakt mit der Innenseite des Rohrleitungsendes kommt. Wenn an einer solchen Verbindungsstelle das Verpressen der Verbindung vergessen wird, ist es möglich, dass bei der beschriebenen Druckprobe eine Leckage an dieser Verbindungsstelle nicht festgestellt wird. Das kann dazu führen, dass die Rohrinstallation mit einer nicht verpressten Verbindungsstelle in Betrieb genommen wird. Zu einem späteren Zeitpunkt kommt es dann aber während des Betriebes des Rohrleitungssystems aufgrund von Druckstößen der durch das Rohrleitungssystem geführten fluiden Medien zu unerwünschten Leckagen.

Der Erfindung liegt das technische Problem zugrunde, einen Fitting der eingangs genannten Art anzugeben, bei dem nicht ordnungsgemäß hergestellte bzw. nicht oder nicht ordnungsgemäß verpresste Verbindungsstellen problemlos erkennbar sind und der nichtsdestoweniger auf einfache und wenig aufwendige Weise herstellbar ist.

Zur Lösung dieses technischen Problems lehrt die Erfindung einen Fitting bzw. Pressfitting für Rohrleitungen mit zumindest einem Anschlussstutzen, an den das Ende einer Rohrleitung anschließbar ist,
wobei an dem Anschlussstutzen zumindest zwei jeweils über den Umfang des Anschlussstutzens umlaufende Halterippen zum Halten eines auf- bzw. eingeschobenen Rohrleitungsendes vorgesehen sind,
wobei in jeder Halterippe zumindest ein axialer Strömungskanal eingebracht ist, dadurch gekennzeichnet, dass der Strömungskanal in der einen Halterippe in Umfangsrichtung versetzt zu dem Strömungskanal in der anderen Halterippe angeordnet ist und die erste Halterippe in der Flucht des Strömungskanals der zweiten Halterippe strömungskanalfrei ausgestaltet ist.

Gemäß einer Ausführungsform der Erfindung besteht der Fitting aus Metall, vorzugsweise aus Rotguss. Nach einer anderen Ausführungsform besteht der Fitting aus Kunststoff.

Dass eine Halterippe zum Halten eines auf- bzw. eingeschobenen Rohrleitungsendes vorgesehen ist, meint insbesondere, dass das auf- bzw. eingeschobene Rohrleitungsende über den Umfang des Rohrleitungsendes in formschlüssigem und/oder reibschlüssigem Kontakt mit der Halterippe steht, so dass das Rohrleitungsende nicht ohne weiteres von dem Anschlussstutzen gleitet bzw. rutscht. Ein erfindungsgemäßer Strömungskanal durchsetzt eine Halterippe in axialer Richtung. Versetzte Anordnung der Strömungskanäle meint, dass die versetzt angeordneten Strömungskanäle in axialer Richtung nicht fluchten.

Der Erfindung liegt die Erkenntnis zugrunde, dass das oben dargelegte technische Problem mit der erfindungsgemäßen Merkmalskombination sehr effektiv gelöst werden kann. Die die Halterippen durchsetzenden Strömungskanäle gewährleisten zunächst, dass auch bei einer dichtenden Verbindung zwischen aufgeschobenem Rohrleitungsende und Halterippen im unverpressten Zustand nichtsdestoweniger jederzeit eine Leckage bei der oben erläuterten Druckprobe feststellbar ist. Das die axialen Strömungskanäle durchströmende fluide Medium verursacht diese Leckagen. Das fluide Medium wird über die Strömungskanäle gleichsam an einer primären dichtenden Verbindung zwischen aufgeschobenem Rohrleitungsende und Halterippen vorbeigeleitet. Dass die axialen Strömungskanäle der benachbarten Halterippen versetzt zueinander angeordnet sind, hat im Rahmen der Erfindung eine besondere Bedeutung. Beim Einsatz des Presswerkzeuges und beim Verpressen der Presshülse kann es vorkommen, dass beispielsweise aufgrund der Position der Pressbacken insbesondere aufgrund geringerer Presshülsen-Kompression bzw. plastischer Presshülsen-Verformung an den gegenüberliegenden Schließpunkten der beiden Pressbackenschalen ein Strömungskanal nicht durch das plastisch verformte Rohrleitungsende bzw. durch das Material des plastisch verformten Rohrleitungsendes geschlossen wird. Durch diesen im verpressten Zustand nicht verschlossenen Strömungskanal kann also fluides Medium strömen, wodurch eine Leckage verursacht werden könnte. Der Erfindung liegt die Erkenntnis zugrunde, dass ein weiterer Strömungskanal, der versetzt zu dem ersten Strömungskanal in einer benachbarten Halterippe vorgesehen ist, bei der plastischen Verformung des Rohrleitungsendes durch das Material des Rohrleitungsendes mit höchster Wahrscheinlichkeit verschlossen wird. Somit kann eine Leckage aufgrund der dichtenden Wirkung dieser letztgenannten Halterippe vermieden werden. Zu betonen ist, dass das technische Problem mit der erfindungsgemäßen Merkmalskombination einerseits auf sehr einfache und wenig aufwendige Weise und andererseits nichtsdestoweniger auf sehr effektive Weise gelöst wird.

Nach besonders bevorzugter Ausführungsform der Erfindung verlaufen die zumindest zwei Halterippen über den Außenumfang des Anschlussstutzens und dementsprechend wird das Ende der Rohrleitung auf den Anschlussstutzen bzw. auf die Halterippen des Anschlussstutzens aufgeschoben. Dabei liegt es im Rahmen der Erfindung, dass der Anschlussstutzen von einer, zweckmäßigerweise am Fitting fixierten Presshülse umgeben wird, so dass das Rohrleitungsende zwischen Anschlussstutzen und Presshülse einschiebbar bzw. auf den Anschlussstutzen aufschiebbar ist. Es liegt weiterhin im Rahmen der Erfindung, dass Rohrleitungsende, Anschlussstutzen und Presshülse zylinderförmig ausgebildet sind. Wenn das Rohrleitungsende zwischen Presshülse und Anschlussstutzen auf den Anschlussstutzen aufgeschoben ist, kann anschließend das Verpressen der Presshülse erfolgen. Dabei wird das Rohrleitungsende ebenso wie die Presshülse plastisch verformt und auf diese Weise kommt ein weiter unten noch beschriebenes Dichtelement in dichtenden Kontakt mit dem Rohrleitungsende. Außerdem wird zumindest der größte Teil der Strömungskanäle in den Halterippen bei dieser plastischen Verformung verschlossen.

Gemäß einer anderen Ausführungsform der Erfindung können die zumindest zwei Halterippen auch über den Innenumfang des Anschlussstutzens verlaufen. Bei dieser Ausführungsform wird das Rohrleitungsende in den Anschlussstutzen eingeschoben. Anschließend wird dann der Anschlussstutzen des Fittings verpresst, so dass der Anschlussstutzen plastisch verformt wird und auf diese Weise kommt das oben genannte Dichtelement in dichtenden Kontakt mit dem Rohrleitungsende und zumindest der größte Teil der Strömungskanäle wird von dem Material des plastisch verformten Anschlussstutzens verschlossen.

Es liegt im Rahmen der Erfindung, dass zumindest eine über den Umfang des Anschlussstutzens umlaufende Aufnahmenut mit darin aufgenommenem Dichtelement vorgesehen ist und dass zumindest ein Teil bzw. zumindest ein Teilbereich des Dichtelementes gegenüber der am weitesten aus der Anschlussstutzenwand herausragenden Oberseite bzw. Oberkante einer Halterippe in radialer Richtung zurückgesetzt angeordnet ist. Nach sehr bevorzugter Ausführungsform der Erfindung verläuft dabei die zumindest eine Aufnahmenut mit dem darin aufgenommenen Dichtelement über den Außenumfang des Anschlussstutzens. Bei dem Dichtelement handelt es sich vorzugsweise um einen Dichtring bzw. O-Ring. Gemäß einer anderen Ausführungsform kann es sich bei dem Dichtelement aber auch um in die Aufnahmenut eingespritzte Dichtmasse handeln. Nach besonders bevorzugter Ausführungsform der Erfindung ist das Dichtelement über den gesamten Umfang des Anschlussstutzens gegenüber der Halterippe bzw. gegenüber den Halterippen zurückgesetzt angeordnet, d. h., die Oberseite des Dichtelementes liegt über den gesamten Umfang des Anschlussstutzens unter der Oberseite bzw. Oberkante der Halterippen. Gemäß sehr bevorzugter Ausführungsform der Erfindung ist ein Dichtelement bzw. zumindest ein Teil dieses Dichtelementes gegenüber zumindest zwei Halterippen in der beschriebenen Weise zurückgesetzt angeordnet. Der zurückgesetzten Anordnung des Dichtelementes oder der Dichtelemente kommt im Rahmen der Erfindung besondere Bedeutung zu. Zunächst kann dadurch vermieden werden, dass ein Dichtelement im unverpressten Zustand eine ungewollte abdichtende Funktion übernimmt und somit bei einer Druckprobe einen verpressten Zustand vortäuschen könnte. Außerdem wird durch die zurückgesetzte Anordnung vermieden, dass das Dichtelement beim Aufschieben bzw. beim Einschieben des Rohrleitungsendes beschädigt wird. Fernerhin bedingt die Anordnung, dass ein relativ einfaches reibwiderstandsfreies Aufschieben des Rohrleitungsendes möglich ist. Das gilt insbesondere, wenn die die Haltefunktion erfüllenden Halterippen nach bevorzugter Ausführungsform der Erfindung einen V-förmigen Querschnitt oder einen U-förmigen Querschnitt aufweisen, wobei die V-Spitze bzw. die U-Wölbung mit dem Rohrleitungsende bzw. mit der Innenoberfläche des Rohrleitungsendes in Kontakt kommt.

Es liegt im Rahmen der Erfindung, dass eine Aufnahmenut mit darin aufgenommenem Dichtelement zwischen zwei Halterippen angeordnet ist, in denen jeweils zueinander versetzte Strömungskanäle vorgesehen sind. Dabei ist das Dichtelement zweckmäßigerweise gegenüber beiden Halterippen in der beschriebenen Weise zurückgesetzt angeordnet. Gemäß einer Ausführungsform der Erfindung weist ein Anschlussstutzen zwei Aufnahmenuten mit jeweils darin aufgenommenem Dichtelement auf und jede dieser Aufnahmenuten bzw. jedes dieser Dichtelemente ist zwischen zwei Halterippen angeordnet.

Eine bevorzugte Ausführungsform der Erfindung ist dadurch gekennzeichnet, dass zumindest drei jeweils über den Umfang des Anschlussstutzens umlaufende Halterippen vorgesehen sind und dass der zumindest eine axiale Strömungskanal der ersten Halterippe sowohl gegenüber dem zumindest einen axialen Strömungskanal der zweiten Halterippe als auch gegenüber dem zumindest einen axialen Strömungskanal der dritten Halterippe in Umfangsrichtung versetzt angeordnet ist. Zweckmäßigerweise ist dabei auch der zumindest eine axiale Strömungskanal der zweiten Halterippe gegenüber dem zumindest einen axialen Strömungskanal der dritten Halterippe in Umfangsrichtung versetzt angeordnet. Gemäß besonders bevorzugter Ausführungsform der Erfindung sind alle axialen Strömungskanäle der ersten Halterippe gegenüber allen axialen Strömungskanälen der zweiten Halterippe als auch gegenüber allen axialen Strömungskanälen der dritten Halterippe versetzt angeordnet und sind weiterhin alle axialen Strömungskanäle der zweiten Halterippe gegenüber allen axialen Strömungskanälen der dritten Halterippe versetzt angeordnet. Entsprechendes gilt, wenn zumindest vier oder mehr Halterippen an dem Anschlussstutzen vorgesehen sind.

Es liegt im Rahmen der Erfindung, dass eine Halterippe zumindest zwei Strömungskanäle aufweist. Vorzugsweise sind zumindest drei axiale Strömungskanäle in einer Halterippe vorgesehen. Wenn drei oder mehr axiale Strömungskanäle in einer Halterippe eingebracht sind, weisen diese axialen Strömungskanäle bevorzugt gleiche Abstände bzw. in etwa gleiche Abstände voneinander in Umfangsrichtung auf.

Es liegt im Rahmen der Erfindung, dass die Strömungskanäle der Halterippen rohrleitungsseitig offen ausgebildet sind. Bei den Strömungskanälen handelt es sich somit um nach außen hin offene axiale Nuten. Vorzugsweise sind die Strömungskanäle im Querschnitt U-förmig oder V-förmig ausgebildet.

Wie oben bereits dargelegt besteht der Fitting bzw. seine Anschlussstutzen nach einer Ausführungsform der Erfindung aus Metall, bevorzugt aus Rotguss. Die Anschlussstutzen eines erfindungsgemäßen Metall-Fittings weisen vorzugsweise einen in Umfangsrichtung umlaufenden gerändelten Haltebereich zum Halten des Rohrleitungsendes auf. Dieser gerändelte Haltebereich befindet sich zweckmäßigerweise in Aufschubrichtung des Rohrleitungsendes hinter den Halterippen bzw. hinter zumindest einem Teil der Halterippen. Der gerändelte Haltebereich besteht bevorzugt aus axialen Rippen mit Haltefunktion für das Rohrleitungsende, wobei die Oberkanten dieser axialen Rippen vorzugsweise auf gleichem Niveau angeordnet sind wie die Oberkanten der Halterippen. Der gerändelte Haltebereich weist zwischen den axialen Rippen axiale Nuten auf. Nach besonders bevorzugter Ausführungsform der Erfindung wird diese Rändelung zusammen, d. h. in einem Arbeitsschritt mit den axialen Strömungskanälen in den Halterippen eingebracht. Dazu wird zweckmäßigerweise ein geeignetes Rollwerkzeug eingesetzt. Die Rändelung ist in einer besonders bevorzugten Ausführungsform gegenüber den vorderen Halterippen erhöht ausgeführt, um auch angefaste Rohrenden in jedem Fall halten zu können.

Wie ebenfalls oben bereits dargelegt, besteht der Fitting bzw. bestehen die Anschlussstutzen des Fittings gemäß einer zweiten Ausführungsform der Erfindung aus Kunststoff. Bei diesen Kunststoff-Fittings ist statt des vorstehend beschriebenen gerändelten Haltebereiches vorzugsweise ein erhabener über den Umfang des Anschlussstutzens umlaufender Haltebereich aus Kunststoff vorgesehen. Dieser Haltebereich aus Kunststoff liegt zweckmäßigerweise in Aufschubrichtung des Rohrleitungsendes hinter den Halterippen bzw. hinter zumindest einem Teil der Halterippen. Auch dieser Haltebereich aus Kunststoff erfüllt wie der oben beschriebene gerändelte Haltebereich des Metall-Fittings eine Haltefunktion für das aufgeschobene Rohrleitungsende. Die Oberseite des erhabenen Haltebereiches aus Kunststoff liegt bevorzugt auf gleichem Niveau bzw. in etwa auf gleichem Niveau wie die Oberkante der Halterippen. Der Haltebereich aus Kunststoff ist in einer besonders bevorzugten Ausführungsform gegenüber den vorderen Halterippen erhöht ausgeführt, um auch angefaste Rohrenden in jedem Fall halten zu können.

Eine sehr bevorzugte Ausführungsform der Erfindung ist dadurch gekennzeichnet, dass eine Presshülse zum Anschluss an einen zugeordneten Anschlussstutzen vorgesehen ist, welche Presshülse an ihrem Anschlussende mit einem Anschlussring verbunden ist, mit dem sie an den Anschlussstutzen anschließbar ist und dass die Presshülse in ihrem an den Anschlussstutzen angeschlossenen unverpressten Zustand relativ zu dem Anschlussring drehbar ist. Die Presshülse besteht vorzugsweise aus Metall, bevorzugt aus Edelstahl. Es liegt im Rahmen der Erfindung, dass es sich bei der Presshülse um ein Tiefziehteil handelt. Es liegt fernerhin im Rahmen der Erfindung, dass die Presshülse zylinderförmig bzw. in etwa zylinderförmig ausgebildet ist. Der Anschlussring besteht vorzugsweise aus Kunststoff. Der Anschlussring bildet gleichsam ein Übergangselement zwischen Presshülse und Anschlussstutzen. Es liegt im Rahmen der Erfindung, dass gemäß der vorstehend beschriebenen bevorzugten Ausführungsform die Presshülse unlösbar mit dem Anschlussring verbunden ist, jedoch (im unverpressten Zustand) relativ zum Anschlussring verdrehbar ist. Vorzugsweise ist eine entsprechende formschlüssige Verbindung zwischen Presshülse und Anschlussring verwirklicht, die einerseits die Unlösbarkeit gewährleistet und andererseits die relative Drehung der Presshülse zum Anschlussring möglich macht. Es hat sich bewährt, hierzu den Anschlussring aus Kunststoff durch Ultraschweißen an der Presshülse zu fixieren.

Vorzugsweise ist am anschlussringabgewandten Stirnende der Presshülse ein über den Umfang der Presshülse umlaufender vorstehender Flansch vorgesehen. Es liegt im Rahmen der Erfindung, dass der Anschlussring in radialer Richtung ebenfalls über den Presshülsenmantel vorsteht, so dass auch der Anschlussring an dem anderen Ende der Presshülse gleichsam einen Flansch bildet. Die beiden vorgenannten Flansche haben sich insoweit bewährt, als sie eine optimale Führung bzw. Positionierung des Presswerkzeuges ermöglichen.

Es liegt im Rahmen der Erfindung, dass der Anschlussring über eine Rastverbindung an den Anschlussstutzen angeschlossen ist, welche Rastverbindung im unverpressten Zustand der Presshülse lösbar ausgeführt ist. Zweckmäßigerweise sind mehrere Rastnasen über den Umfang des Anschlussringes verteilt und diese Rastnasen greifen vorzugsweise in eine Rastnut des Anschlussstutzens ein. Nach sehr bevorzugter Ausführungsform der Erfindung ist der Anschlussring relativ zum Anschlussstutzen verdrehbar.

Es liegt im Rahmen der Erfindung, dass die Presshülse an ihrem anschlussringseitigen Ende zumindest eine als Sichtfenster dienende Öffnung aufweist. Dabei ist die Öffnungsfläche eines solchen Sichtfensters zweckmäßigerweise gering im Vergleich zur Presshülsenmantelfläche. Vorzugsweise sind mehrere über den Umfang der Presshülse verteilte Öffnungen bzw. Sichtfenster vorgesehen. Dadurch, dass die Sichtfenster vor dem Anschlussring in dem Presshülsenmantel vorgesehen sind, kann durch die Sichtfenster erkannt werden, ob das Rohrleitungsende vollständig auf den zugeordneten Anschlussstutzen bzw. vollständig in die zugeordnete Presshülse eingeschoben ist. Aufgrund der relativen Verdrehbarkeit kann das gleichsam von jeder Seite des Fittings her festgestellt werden. Die relative Verdrehbarkeit der Presshülse gegenüber dem Anschlussring hat insbesondere den Vorteil, dass die vorstehend beschriebene Kontrolle durch alleinige Drehung der Presshülse auch dann möglich ist, wenn der Anschlussring in seiner Drehbarkeit behindert ist, beispielsweise durch Kontakt mit einer benachbarten Wand, so dass das Aggregat aus Anschlussring und Presshülse nicht gemeinsam relativ zum Anschlussstutzen verdreht werden kann.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines erfindungsgemäßen Fittings in einer ersten Ausführungsform,
- Fig. 2: einen Schnitt A-A durch den Gegenstand gemäß Fig. 1,
- Fig. 3: einen Schnitt B-B durch den Gegenstand nach Fig. 1,
- Fig. 4: einen Schnitt C-C durch den Gegenstand gemäß Fig. 1,
- Fig. 5: einen Schnitt D-D durch den Gegenstand nach Fig. 1 und
- Fig. 6: eine Seitenansicht im Schnitt einer weiteren Ausführungsform des erfindungsgemäßen Fittings.

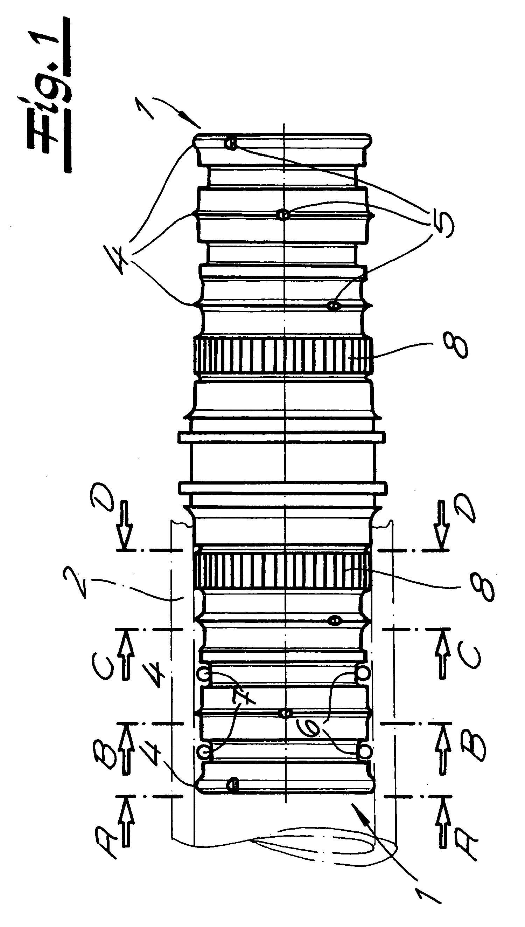

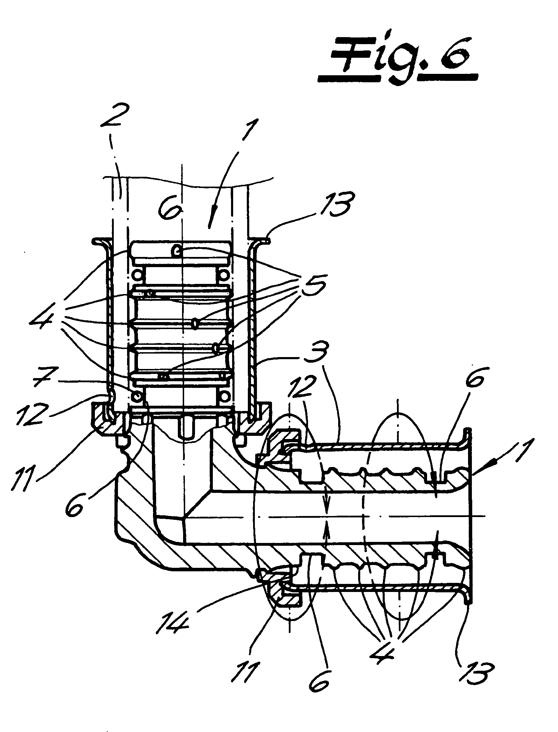

Die Figuren zeigen Fittings mit zwei Anschlussstutzen 1, wobei an einen Anschlussstutzen 1 ein Rohrleitungsende 2 einer Rohrleitung anschließbar ist. Im Ausführungsbeispiel nach den Figuren wird das Rohrleitungsende 2 auf einen zugeordneten Anschlussstutzen 1 aufgeschoben und dieses Rohrleitungsende 2 befindet sich dann zwischen einer Presshülse 3 (Fig. 6) und dem Anschlussstutzen 1. In der Fig. 1 wurde die Presshülse 3 der Einfachheit halber nicht dargestellt. Um eine Verbindung zwischen Rohrleitungsende 2 und Anschlussstutzen 1 herzustellen, wird die Presshülse 3 mit einem nicht dargestellten Presswerkzeug verpresst und dadurch wird das Rohrleitungsende 2 plastisch verformt, so dass ein dichtender Kontakt mit dem Anschlussstutzen 1 resultiert. Erfindungsgemäß weisen die Anschlussstutzen 1 Halterippen 4 auf, die über den Außenumfang des Anschlussstutzens umlaufen. Diese Halterippen 4 sind zum Halten eines aufgeschobenen Rohrleitungsendes 2 (vor dem Verpressen) vorgesehen. Die Innenoberfläche des Rohrleitungsendes 2 kommt dabei in Kontakt mit den Oberkanten der Halterippen 4, so dass das Rohrleitungsende 2 gleichsam form- und reibschlüssig vor dem Verpressen auf dem Anschlussstutzen 1 gehalten wird.

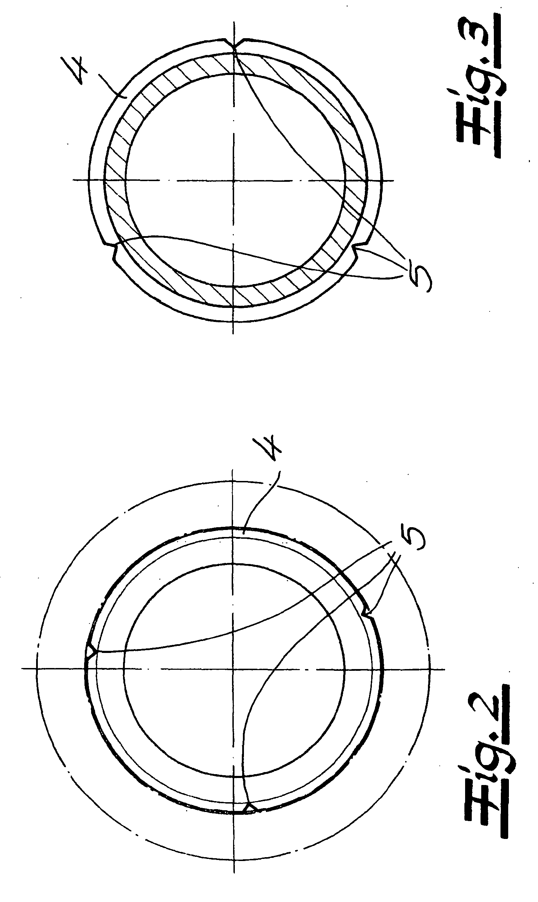

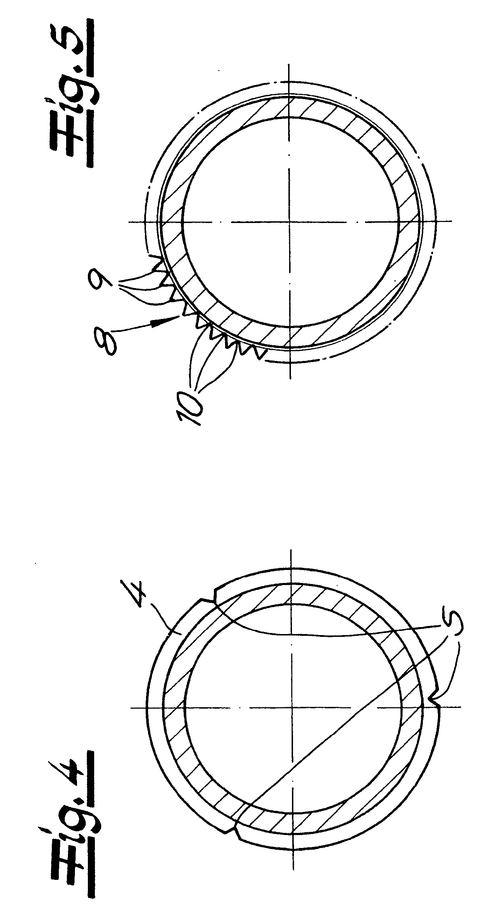

In den Fig. 1 bis 5 ist eine erste Ausführungsform eines erfindungsgemäßen Fittings dargestellt, bei der der Fitting aus Metall bzw. Rotguss besteht. Der Fitting ist hier als linearer Fitting mit zwei gegenüberliegenden Anschlussstutzen 1 ausgebildet. An einem Anschlussstutzen 1 sind jeweils drei Halterippen 4 vorgesehen, die über den Außenumfang des zugeordneten Anschlussstutzens 1 umlaufen. In jeder Halterippe 4 sind drei im Querschnitt V-förmige axiale Strömungskanäle 5 vorgesehen, die bezüglich des Umfangs einer Halterippe 4 im Ausführungsbeispiel gleiche Abstände voneinander aufweisen (siehe Fig. 2 bis 4). Dabei sind die axialen Strömungskanäle 5 der ersten Halterippe 4 (Fig. 2) sowohl gegenüber den axialen Strömungskanälen 5 der zweiten Halterippe 4 (Fig. 3) als auch gegenüber den axialen Strömungskanälen 5 der dritten Halterippe 4 (Fig. 4) bezüglich der Umfangsrichtung versetzt zueinander angeordnet. Auch die axialen Strömungskanäle 5 der zweiten Halterippe 4 (Fig. 3) sind versetzt gegenüber den axialen Strömungskanälen 5 der dritten Halterippe 4 (Fig. 4) angeordnet. Erfindungsgemäß wird vermieden, dass sich die axialen Strömungskanäle 5 von zwei oder mehr Halterippen 4 fluchtend zu einem linearen axialen Kanal ergänzen.

In der Fig. 1 sind jeweils zwei über den Umfang eines Anschlussstutzens 1 umlaufende Aufnahmenuten 6 mit jeweils darin aufgenommenem Dichtelement 7 dargestellt. Die Dichtelemente 7 sind als O-Ringe ausgebildet. Jede Aufnahmenut 6 mit Dichtelement 7 ist zwischen zwei Halterippen 4 angeordnet. In der Fig. 1 ist erkennbar, dass die Dichtelemente 7 gegenüber den Oberkanten der Halterippen 4 in radialer Richtung zurückgesetzt angeordnet sind. Mit anderen Worten überragen die Halterippen 4 die Dichtelemente 7 und zwar vorzugsweise und im Ausführungsbeispiel über den gesamten Umfang des Anschlussstutzens 1.

Der Metall-Fitting nach den Fig. 1 bis 5 weist im Ausführungsbeispiel an jedem Anschlussstutzen 1 einen gerändelten Haltebereich 8 auf, der ebenfalls zum Halten des jeweils zugeordneten Rohrleitungsendes 2 im unverpressten Zustand dient. Der gerändelte Haltebereich 8 eines Anschlussstutzens 1 befindet sich in Aufschubrichtung des Rohrleitungsendes 2 hinter den Halterippen 4. Der gerändelte Haltebereich 8 weist axiale Rippen 9 mit V-förmigem Querschnitt sowie axiale Nuten 10 mit ebenfalls V-förmigem Querschnitt auf (siehe insbesondere Fig. 5). Vorzugsweise wird diese Rändelung gemeinsam mit den axialen Strömungskanälen 5 in einem Arbeitsschritt in den Anschlussstutzen 1 eingebracht. Zweckmäßigerweise sind im Übrigen die Oberkanten der axialen Rippen 9 auf gleichem Niveau bzw. auf gleicher Höhe wie die Oberkanten der Halterippen 4 angeordnet.

Fig. 6 zeigt eine zweite Ausführungsform eines erfindungsgemäßen Fittings, bei der der Fitting aus Kunststoff besteht. Dieser Fitting ist winkelförmig mit zwei senkrecht zueinander angeordneten Anschlussstutzen 1 ausgebildet. In der Fig. 6 sind im Übrigen die Presshülsen 3 dargestellt, die über dem jeweiligen Anschlussstutzen 1 bzw. über dem Rohrleitungsende 2 angeordnet sind. Es ist auch erkennbar, dass die Presshülsen 3, die Rohrleitungsenden 2 und die Anschlussstutzen 1 zylinderförmig ausgebildet sind.

Jeder Anschlussstutzen 1 des Kunststoff-Fittings gemäß Fig. 6 weist insgesamt fünf Halterippen 4 auf. In jeder Halterippe 4 sind mehrere axiale Strömungskanäle 5 eingebracht. Die axialen Strömungskanäle 5 jeder Halterippe sind gegenüber den axialen Strömungskanälen 5 der übrigen Halterippen 4 versetzt angeordnet. In Fig. 6 ist weiterhin erkennbar, dass auch hier zwei Aufnahmenuten 6 mit aufgenommenem Dichtelement 7 vorgesehen sind. Die Dichtelemente 7 sind auch hier in der oben beschriebenen Weise gegenüber den Oberkanten der Halterippen 4 in radialer Richtung zurückgesetzt angeordnet.

Jede Presshülse 3 ist in Fig. 6 an den jeweils zugeordneten Anschlussstutzen 1 angeschlossen und zwar jeweils über einen Anschlussring 11. Der Anschlussring 11 ist über eine Rastverbindung mit dem zugeordneten Anschlussstutzen 1 verbunden und ist gegenüber dem Anschlussstutzen 1 relativ verdrehbar. Die Presshülse 3 ist an den zugeordneten Anschlussring 11 mit der Maßgabe angeschlossen, dass sie (im unverpressten Zustand) relativ zu dem Anschlussring 11 drehbar ist. Das wurde in Fig. 6 angedeutet, wie auch die relative Verdrehbarkeit des Anschlussringes 11. Die Presshülse 3 ist über eine entsprechende Formschlussverbindung unlösbar mit dem Anschlussring 11 verbunden, jedoch relativ zum Anschlussring 11 verdrehbar. Die Presshülse 3 weist an ihrem anschlussringseitigen Ende als Sichtfenster dienende Öffnungen 12 auf. Vorzugsweise und im Ausführungsbeispiel mögen über den Umfang der Presshülse 3 insgesamt drei Öffnungen 12 mit gleichem Abstand zueinander verteilt sein. In der Fig. 6 ist erkennbar, dass die Öffnungsfläche einer Öffnung 12 klein gegenüber der Mantelfläche der Presshülse 3 ist. Durch die Sichtfenster kann man erkennen, ob das Rohrleitungsende 2 ordnungsgemäß und vollständig eingeschoben wurde. Aufgrund der relativen Verdrehbarkeit ist das quasi an jeder Stelle bzw. an jeder Seite des Fittings möglich.

In Fig. 6 ist weiterhin erkennbar, dass die Presshülsen 3 an ihrem Stirnende jeweils einen über ihren Umfang umlaufenden vorstehenden Flansch 13 aufweisen. Der Anschlussring 11 bildet jeweils einen gegenüberliegenden entsprechenden Flansch. Die beiden Flansche ermöglichen eine optimale Führung bzw. Positionierung eines Presswerkzeuges.
Statt des gerändelten Haltebereiches 8 weist der Kunststoff-Fitting in Fig. 6 einen erhabenen Haltebereich 14 zum Halten des Rohrleitungsendes 2 im unverpressten Zustand auf. Dieser erhabene Haltebereich 14 ist im Ausführungsbeispiel gemäß Fig. 6 in Aufschubrichtung des Rohrleitungsendes 2 hinter den Halterippen 4 angeordnet. Die Oberseite dieses erhabenen Haltebereiches 14 ist zweckmäßigerweise und im Ausführungsbeispiel auf gleichem Niveau bzw. auf gleicher Höhe angeordnet wie die Oberkanten der Halterippen 4. Im Ausführungsbeispiel gemäß Fig. 6 ist im Übrigen eine Aufnahmenut 6 mit aufgenommenem Dichtelement 7 zwischen einer Halterippe 4 und diesem erhabenen Haltebereich 14 angeordnet.

## Patentansprüche

1. Fitting für Rohrleitungen mit zumindest einem Anschlussstutzen (1), an den das Ende einer Rohrleitung anschließbar ist,
wobei an den Anschlussstutzen (1) zumindest zwei über den Umfang des Anschlussstutzens (1) umlaufende Halterippen (4) zum Halten eines auf- bzw. einschiebbaren Rohrleitungsendes (2) vorgesehen sind,
wobei in jeder Halterippe (4) zumindest ein axialer Strömungskanal (5) eingebracht ist,
**dadurch gekennzeichnet, dass**
der Strömungskanal (5) in der ersten Halterippe (4) versetzt zu dem Strömungskanal (5) in der zweiten Halterippe (4) angeordnet ist und die erste Halterippe in der Flucht des Strömungskanals der zweiten Halterippe strömungskanalfrei ausgestaltet ist.

2. Fitting nach Anspruch 1, wobei die zumindest zwei Halterippen (4) über den Außenumfang des Anschlussstutzens (1) umlaufen und wobei das Ende der Rohrleitung auf den Anschlussstutzen (1) aufschiebbar ist.

3. Fitting nach einem der Ansprüche 1 oder 2, wobei zumindest eine über den Umfang des Anschlussstutzens (1) umlaufende Aufnahmenut (6) mit darin aufgenommenem Dichtelement (7) vorgesehen ist und wobei zumindest ein Teil des Dichtelementes (7) gegenüber der am weitesten aus der Anschlussstutzenwand herausragenden Oberseite bzw. Oberkante einer Halterippe (4) zurückgesetzt angeordnet ist.

4. Fitting nach Anspruch 3, wobei die Aufnahmenut (6) mit darin aufgenommenem Dichtelement (7) zwischen zwei Halterippen (4) angeordnet ist.

5. Fitting nach einem der Ansprüche 1 bis 4, wobei zumindest drei jeweils über den Umfang des Anschlussstutzens (1) umlaufende Halterippen (4) vorgesehen sind und wobei der zumindest eine axiale Strömungskanal (5) der ersten Halterippe (4) sowohl gegenüber dem zumindest einen axialen Strömungskanal (5) der zweiten Halterippe (4) als auch gegenüber dem zumindest einen axialen Strömungskanal (5) der dritten Halterippe (4) versetzt angeordnet ist.

6. Fitting nach einem der Ansprüche 1 bis 5, wobei eine Halterippe (4) zumindest zwei axiale Strömungskanäle (5) aufweist.

7. Fitting nach einem der Ansprüche 1 bis 6, wobei die Strömungskanäle (5) rohrleitungsseitig offen ausgebildet sind.

8. Fitting nach einem der Ansprüche 1 bis 7, wobei der Anschlussstutzen (1) einen Haltebereich (8, 14) zum Halten des Rohrleitungsendes (2) im unverpressten Zustand aufweist und wobei der Haltebereich (8, 14) gegenüber den Halterippen (4) erhöht ausgeführt ist.

9. Fitting nach einem der Ansprüche 1 bis 8, wobei eine Presshülse (3) zum Anschluss an einen Anschlussstutzen (1) vorgesehen ist, welche Presshülse (3) an ihrem Anschlussende mit einem Anschlussring (11) verbunden ist, mit dem sie an den Anschlussstutzen (1) anschließbar ist und wobei die Presshülse (3) in ihrem an den Anschlussstutzen (1) angeschlossenen unverpressten Zustand relativ zu dem Anschlussring (11) drehbar ist.

10. Fitting nach Anspruch 9, wobei die Presshülse (3) an ihrem anschlussringseitigen Ende zumindest eine als Sichtfenster dienende Öffnung (12) aufweist.

## Claims

1. Fitting for pipelines, comprising at least one connector (1) to which the end of a pipeline can be connected,
wherein at least two retaining ribs (4) which run around the circumference of the connector (1) are provided on the connector (1) in order to retain a pipeline end (2) which can be pushed on or in,
wherein at least one axial flow channel (5) is formed in each retaining rib (4),
**characterised in that** the flow channel (5) in the first retaining rib (4) is arranged offset with respect to the flow channel (5) in the second retaining rib (4), and the first retaining rib exhibits no flow channel in alignment with the flow channel of the second retaining rib.

2. Fitting according to claim 1, wherein the at least two retaining ribs (4) run around the outer circumference of the connector (1), and wherein the end of the pipeline can be pushed onto the connector (1).

3. Fitting according to one of claims 1 or 2, wherein at least one receiving groove (6) with a sealing element (7) received therein is provided which runs around the circumference of the connector (1), and wherein at least part of the sealing element (7) is arranged set back with respect to the upper side or upper edge of a retaining rib (4) protruding furthest from the connector wall.

4. Fitting according to claim 3, wherein the receiving groove (6) with a sealing element (7) received therein is arranged between two retaining ribs (4).

5. Fitting according to one of claims 1 to 4, wherein at least three retaining ribs (4) which in each case run around the circumference of the connector (1) are provided, and wherein the at least one axial flow channel (5) of the first retaining rib (4) is arranged offset both with respect to the at least one axial flow channel (5) of the second retaining rib (4) and with respect to the at least one axial flow channel (5) of the third retaining rib (4).

6. Fitting according to one of claims 1 to 5, wherein a retaining rib (4) has at least two axial flow channels (5).

7. Fitting according to one of claims 1 to 6, wherein the flow channels (5) are designed to be open on the pipeline side.

8. Fitting according to one of claims 1 to 7, wherein the connector (1) has a retaining area (8, 14) for retaining the pipeline end (2) in the non-pressed state, and wherein the retaining area (8, 14) is designed to be raised with respect to the retaining ribs (4).

9. Fitting according to one of claims 1 to 8, wherein a press sleeve (3) for connection to a connector (1) is provided, which press sleeve (3) is connected at its connection end to a connection ring (11), by means of which it can be connected to the connector (1), and wherein the press sleeve (3) can be rotated relative to the connection ring (11) in its non-pressed state connected to the connector (1).

10. Fitting according to claim 9, wherein the press sleeve (3) has at its end on the connection ring side at least one opening (12) which serves as a viewing window.

## Revendications

1. Raccord pour tuyauteries comprenant au moins une tubulure de raccordement (1), à laquelle peut être raccordée l'extrémité d'une tuyauterie,
au moins deux nervures de retenue (4), qui encerclent le pourtour de la tubulure de raccordement (1), étant prévues sur la tubulure (1) pour le maintien d'une extrémité de tuyauterie (2) qui peut être emmanchée et/ou insérée,
au moins un canal d'écoulement axial (5) étant pratiqué dans chaque nervure de retenue(4),
**caractérisé en ce que**
le canal d'écoulement (5) dans la première nervure de retenue (4) est en déport par rapport au canal d'écoulement (5) dans la deuxième nervure de retenue (4) et la première nervure de retenue est configurée sans canal d'écoulement aligné sur le canal d'écoulement de la deuxième nervure de retenue.

2. Raccord suivant la revendication 1, dans lequel les au moins deux nervures de retenue (4) encerclent le pourtour extérieur de la tubulure de raccordement (1), et dans lequel l'extrémité de la tuyauterie peut être emmanchée sur la tubulure de raccordement (1).

3. Raccord suivant l'une des revendications 1 et 2, dans lequel il est prévu au moins une gorge de réception (6), qui encercle le pourtour de la tubulure de raccordement (1), avec un élément d'étanchéité (7) logé dans cette dernière, et dans lequel au moins une partie de l'élément d'étanchéité (7) est disposée en recul par rapport au côté supérieur et/ou au bord supérieur d'une nervure de retenue (4), qui dépasse le plus loin de la paroi de la tubulure de raccordement.

4. Raccord suivant la revendication 3, dans lequel la gorge de réception (6), avec l'élément d'étanchéité (7) logé dans cette dernière, est disposée entre deux nervures de retenue (4).

5. Raccord suivant l'une des revendications 1 à 4, dans lequel sont prévues au moins trois nervures de retenue (4) qui encerclent respectivement le pourtour de la tubulure de raccordement (1), et dans lequel le au moins un canal d'écoulement axial (5) de la première nervure de retenue (4) est disposé en déport aussi bien par rapport à le au moins un canal d'écoulement axial (5) de la deuxième nervure de retenue (4) que par rapport à le au moins un canal d'écoulement axial (5) de la troisième nervure de retenue (4).

6. Raccord suivant l'une des revendications 1 à 5, dans lequel une nervure de retenue (4) comporte au moins deux canaux d'écoulement axiaux (5).

7. Raccord suivant l'une des revendications 1 à 6, dans lequel les canaux d'écoulement (5) ont une configuration ouverte du côté tuyauterie.

8. Raccord suivant l'une des revendications 1 à 7, dans lequel la tubulure de raccordement (1) comporte une zone de retenue (8, 14) pour le maintien de l'extrémité de tuyauterie (2) dans l'état de non serrage, et dans lequel la zone de retenue (8, 14) a une réalisation en relief par rapport aux nervures de retenue (4).

9. Raccord suivant l'une des revendications 1 à 8, dans lequel est prévue une douille de serrage (3) pour le raccordement à une tubulure de raccordement (1), laquelle douille de serrage (3) est assemblée sur son extrémité de raccordement avec un anneau de raccordement (11), par lequel elle peut être raccordée à la tubulure de raccordement (1), et dans lequel la douille de serrage (3) peut tourner par rapport à l'anneau de raccordement (11) dans son état de non serrage, raccordé à la tubulure de raccordement (1).

10. Raccord suivant la revendication 9, dans lequel la douille de serrage (3) comporte au moins une ouverture (12), servant de regard, sur son extrémité du côté anneau de raccordement.
